# EUROPÄISCHE PATENTANMELDUNG

(11) **EP 3 192 975 A1**
(43) Veröffentlichungstag der Anmeldung: **19.07.2017**
(21) Anmeldenummer: 16151673.7
(22) Anmeldetag: 18.01.2016
(51) Int. Cl.: F01D 11/00, F02C 7/28, F16J 15/08, F01D 25/14

(54) **GASTURBINE MIT EINEM RINGFÖRMIGEN DICHTUNGSELEMENT UND ZUGEHÖRIGES DICHTUNGSELEMENT**

(71) Anmelder: Siemens Aktiengesellschaft, 80333 München (DE)
(72) Erfinder: Ahmad, Fathi, 41564 Kaarst (DE); Radulovic, Radan, 44799 Bochum (DE)

(57) **Zusammenfassung**

Die Erfindung betrifft eine Gasturbine mit einem Gehäuse und an einer Innenseite des Gehäuses gehaltenen Leitschaufelkränzen und Zwischenkränzen, die in einer axialen Richtung abwechselnd nebeneinander angeordnet sind und eine Außenwandung eines sich in der axialen Richtung erstreckenden Strömungskanals definieren, wobei zwischen dem Gehäuse und den Kränzen zumindest ein Kühlkanal ausgebildet ist, und wobei wenigstens einem, insbesondere jedem zwischen benachbart angeordneten Kränzen gebildeten und den Strömungskanal mit dem zumindest einen Kühlkanal verbindenden Axialspalt ein ringförmiges und in dem zumindest einen Kühlkanal positioniertes Dichtungselement zugeordnet ist, wobei das Dichtungselement einen C-förmigen Querschnitt mit einem sich in radialer Richtung erstreckenden Radialabschnitt und zwei sich senkrecht zu dem Radialabschnitt erstreckenden Axialabschnitten aufweist.

## Beschreibung

Die vorliegende Erfindung betrifft eine Gasturbine mit einem Gehäuse und an einer Innenseite des Gehäuses gehaltenen Leitschaufelkränzen und Zwischenkränzen, die in einer axialen Richtung abwechselnd nebeneinander angeordnet sind und eine Außenwandung eines sich in der axialen Richtung erstreckenden Strömungskanals definieren, wobei zwischen dem Gehäuse und den Kränzen zumindest ein Kühlkanal ausgebildet ist, und wobei wenigstens einem, insbesondere jedem zwischen benachbart angeordneten Kränzen gebildeten und den Strömungskanal mit dem zumindest einen Kühlkanal verbindenden Axialspalt ein ringförmiges und in dem zumindest einen Kühlkanal positioniertes Dichtungselement zugeordnet ist.

Derartige Gasturbinen sind im Stand der Technik in unterschiedlichen Ausgestaltungen bekannt und dienen dazu, die thermische Energie eines Heißgases in Rotationsenergie eines Turbinenläufers umzuwandeln. Mit der Rotationsenergie des Turbinenläufers kann beispielsweise ein Verdichter zum Ansaugen und Verdichten von Umgebungsluft und/oder ein Generator zur Erzeugung elektrischer Energie angetrieben werden.

Eine solche Gasturbine umfasst üblicherweise ein Gehäuse, an dessen Innenseite eine Mehrzahl von Leitschaufelkränzen und Zwischenkränzen gehalten ist. Die Leitschaufelkränze und die Zwischenkränze sind in einer axialen Richtung abwechselnd nebeneinander angeordnet und definieren eine Außenwandung eines sich in der axialen Richtung erstreckenden Strömungskanals. Zwischen dem Gehäuse und den Kränzen, d.h. den Leitschaufelkränzen und den Zwischenkränzen, ist zur Kühlung der Außenwandung des Strömungskanals zumindest ein Kühlkanal ausgebildet. Zwischen benachbart angeordneten Kränzen sind jeweils Axialspalte gebildet, die den zumindest einen Kühlkanal mit dem Strömungskanal verbinden. Jedem Axialspalt ist ein ringförmiges Dichtungselement zugeordnet, das in dem zumindest einen Kühlkanal positioniert ist.

In dem Strömungskanal der Gasturbine erstreckt sich ein Turbinenläufer, der um eine zentrale Drehachse drehbar gelagert ist. Der Turbinenläufer umfasst eine Mehrzahl von axial nebeneinander angeordneten Radscheiben, an deren äußeren Stirnflächen jeweils Laufschaufeln gehalten sind, deren axiale Positionen zu den axialen Positionen der an dem Gehäuse gehaltenen Zwischenkränze korrespondieren.

Während des Betriebs der Gasturbine wird durch Verbrennen eines Brennstoffs erzeugtes Heizgas in dem Strömungskanal entspannt. Durch die Leitschaufelkränze wird das strömende Heißgas derart gelenkt, dass es unter Erzeugung eines möglichst großen auf den Turbinenläufer wirkenden Drehmoments auf die Laufschaufelkränze trifft. Das Drehmoment versetzt den Turbinenläufer in Rotation, wodurch ein an den Turbinenläufer gekoppelter Generator angetrieben wird. Darüber hinaus wird die Rotationsenergie des Turbinenläufers genutzt, um einen Verdichter anzutreiben, der Umgebungsluft ansaugt und verdichtet. Die verdichtete Luft wird unter anderem in den eingangs genannten Kühlkanal der Gasturbine eingeleitet, um die Außenwandung des Strömungskanals zu kühlen.

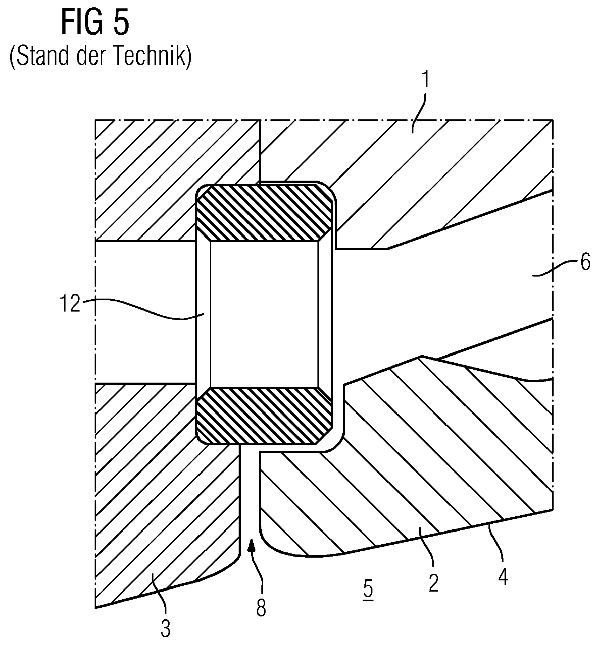

Um ein Entweichen der verdichteten Luft aus dem zumindest einen zwischen dem Gehäuse und den Kränzen definierten Kühlkanal durch die Axialspalte in den Strömungskanal zu verhindern, verwendet die Anmelderin bislang ringförmige Dichtungselemente aus Metall, die jeweils einen im Wesentlichen rechteckigen Querschnitt mit abgerundeten Ecken aufweisen. Ein solches Dichtungselement ist in Figur 5 abgebildet.

Aufgrund fertigungsbedingter Ungenauigkeiten und/oder konstruktiver Unterschiede zwischen den Leitschaufelkränzen und den Zwischenkränzen und/oder infolge thermisch bedingter Verformungen der Leitschaufelkränze und/oder Zwischenkränze während des Betriebs werden die Axialspalte zwischen den Leitschaufelkränzen und den Zwischenkränzen durch die Dichtungselemente nicht vollständig und/oder nicht dauerhaft abgedichtet, so dass verdichtete Luft aus dem zumindest einen Kühlkanal in den Strömungskanal entweichen kann. Dies geht mit einer geringeren Kühlleistung und somit einer geringeren Lebensdauer der Leitschaufelkränze und der Zwischenkränze sowie mit einem geringeren thermischen Wirkungsgrad der Gasturbine einher.

Ausgehend von diesem Stand der Technik ist es eine Aufgabe der vorliegenden Erfindung, eine Gasturbine der eingangs genannten Art zu schaffen, die eine größere Kühlleistung und einen höheren thermischen Wirkungsgrad besitzt.

Zur Lösung dieser Aufgabe schafft die vorliegende Erfindung eine Gasturbine der eingangs genannten Art, bei der jedes Dichtungselement einen im Wesentlichen C-förmigen Querschnitt mit einem sich in radialer Richtung erstreckenden Radialabschnitt und zwei sich senkrecht zu dem Radialabschnitt erstreckenden Axialabschnitten aufweist.

Der Erfindung liegt die Überlegung zugrunde, das bislang verwendete Dichtungselement mit kompaktem Querschnitt durch ein Dichtungselement mit im Wesentlichen C-förmigem Querschnitt zu ersetzen. Ein Dichtungselement mit einem in üblichen C-förmigen Querschnitt kann sich besser an unterschiedliche und sich während des Betriebs der Gasturbine verändernde Einbaubedingungen anpassen. Es besitzt daher eine bessere Abdichtwirkung als ein kompaktes Dichtungselement, wodurch ein Entweichen verdichteter Luft aus dem zumindest einen Kühlkanal durch den Axialspalt in den Strömungskanal weiter reduziert oder vollständig verhindert wird. Dies führt zu einer verbesserten Kühlleistung und damit erhöhten Lebensdauer der Leitschaufelkränze und Zwischenkränze sowie einem höheren thermischen Wirkungsgrad der Gasturbine. Abgesehen davon ist zur Herstellung eines Dichtungselements mit C-förmigem Querschnitt weniger Material erforderlich, was mit einer entsprechenden Kostenersparnis einhergeht. Ein weiterer Vorteil liegt darin, dass beispielsweise im Rahmen einer Wartung zunächst verbaute Dichtungselemente mit kompaktem Querschnitt durch solche mit C-förmigem Querschnitt problemlos ersetzt werden können.

Gemäß einer Weiterbildung weist das Dichtungselement ein Metallblech auf, wobei das Metallblech bereichsweise Zickzack-förmig oder mäanderförmig gefaltet ist, insbesondere im Bereich der Axialabschnitte. Metallbleche sind einfach in der Handhabung und gut zu verarbeiten. Durch bereichsweise Zickzack-förmige oder mäanderförmige Faltung lässt sich bei Bedarf das Dichtungselement bereichsweise dicker ausbilden und/oder mit einer Federwirkung versehen. Durch Zickzack-förmige oder mäanderförmige Faltungen insbesondere im Bereich der Axialabschnitte lässt sich entsprechend eine verbesserte Anpassungsfähigkeit des Dichtungselements an unterschiedliche radiale Einbaubedingungen erreichen.

Vorteilhaft ist das Metallblech wenigstens bis 450°C, bevorzugt bis 500°C hitzebeständig und/oder wenigstens bis 10 bar, bevorzugt bis 15 bar durchbeständig. Die durch den zumindest einen Kühlkanal strömende verdichtete Luft besitzt eine Temperatur von ca. 450°C und einen Druck von ca. 10 bar. Das Dichtungselement soll zumindest diesen Temperatur- und Druckbedingungen zuverlässig standhalten und aus Sicherheitsgründen möglichst eine darüber hinausgehende Beständigkeit besitzen.

Gemäß einer Variante weist das Dichtungselement wenigstens abschnittsweise eine Mehrzahl von Schichten auf, wobei insbesondere wenigstens zwei Schichten aus unterschiedlichen Materialien bestehen. Auf diese Weise lassen sich günstige Eigenschaften mehrerer Materialien in einem Dichtungselement kombinieren. Beispielsweise kann ein besonders druckbeständiges Grundmaterial mit einer besonders hitzebeständigen Materialschicht versehen werden oder können zwei Materialien mit unterschiedlicher Wärmeausdehnung vorgesehen werden, um unter Hitzeeinwirkung eine gewünschte Biegewirkung zu erzielen.

Vorteilhaft ist das Dichtungselement derart angeordnet, dass die freien Enden seiner Axialabschnitte zu dem Leitschaufelkranz weisen. Diese Anordnung bewährt sich für den Fall, dass die verdichtete Luft in dem zumindest einen Kühlkanal von den Leitschaufelkränzen her auf das Dichtungselement trifft. Durch den von innen auf das Dichtungselement wirkenden Druck der verdichteten Luft werden die Axialabschnitte des Dichtungselements radial auseinandergedrückt, was mit einer weiteren Verbesserung der Abdichtwirkung des Dichtungselements einhergeht.

Gemäß einer Weiterentwicklung ist das Dichtungselement in einen ringförmigen Aufnahmeraum eingesetzt, der durch zwei benachbart angeordnete Kränze und/oder das Gehäuse definiert ist. Ein derartiger Aufnahmeraum erleichtert die genaue Positionierung und Fixierung des Dichtungselements.

Vorteilhaft ist der Aufnahmeraum zumindest teilweise in zueinander weisenden axialen Stirnflächen benachbart angeordneter Kränze ausgebildet. In diesem Fall kann der radial innere Axialabschnitt des Dichtungselements den nach innen zum Strömungskanal weisenden Axialspalt wie ein Deckel abdichten.

Bevorzugt ist das Dichtungselement in dem Aufnahmeraum radial derart vorgespannt, dass sich die Axialabschnitte gegen Umfangsflächen des Aufnahmeraums abstützen. Eine radiale Vorspannung sorgt bereits ohne einen durch die verdichtete Luft verursachten Druck für eine möglichst gute Anpassung an unterschiedliche radiale Einbaubedingungen.

In an sich bekannter Weise kann jeder Leitschaufelkranz und/oder jeder Zwischenkranz eine Mehrzahl von Kranzsegmenten umfassen, die entlang einer Umfangsrichtung nebeneinander angeordnet ist. Dies erleichtert die Handhabung und die Montage der Zwischenkränze.

Bevorzugt ist in dem Gehäuse eine Mehrzahl von Kühlfluidzuleitungen ausgebildet, die in den zumindest einen Kühlkanal münden. Mehrere Kühlfluidzuleitungen gewährleisten eine über die Außenwandung des Strömungskanals annähernd gleichmäßige Kühlleistung. Beispielsweise können die Kühlfluidzuleitungen jeweils axial korrespondierend zu den Leitschaufelkränzen in den zumindest einen Kühlkanal münden, was gleichzeitig eine effektive Kühlung der Leitschaufeln ermöglicht.

Ferner schafft die vorliegende Erfindung ein ringförmiges Dichtungselement zum Abdichten eines Axialspalts zwischen einem Leitschaufelkranz und einem axial benachbart angeordneten Zwischenkranz einer Gasturbine, wobei das Dichtungselement einen C-förmigen Querschnitt mit einem sich in radialer Richtung erstreckenden Radialabschnitt und zwei sich senkrecht zu dem Radialabschnitt erstreckenden Axialabschnitten besitzt. Ein derartiges Dichtungselement kann ohne weiteres anstelle eines vorhandenen Dichtungselements mit rechteckigem Querschnitt verbaut werden. Es erzielt eine große Abdichtwirkung. Zudem ist es kostengünstig in der Herstellung und bei der Montage leicht handhabbar.

Bevorzugt weist das Dichtungselement wenigstens abschnittsweise eine Mehrzahl von Schichten auf, wobei insbesondere wenigstens zwei Schichten aus unterschiedlichen Materialen bestehen. Auf diese Weise lassen sich günstige Eigenschaften unterschiedlicher Materialien in einem Dichtungselement kombinieren.

Gemäß einer Weiterbildung weist das Dichtungselement ein Metallblech auf, wobei das Metallblech bereichsweise Zickzack-förmig oder mäanderförmig gefaltet ist, insbesondere im Bereich der Axialabschnitte. Metallbleche sind einfach in der Handhabung und gut zu verarbeiten. Durch Zickzack-förmige oder mäanderförmige Faltungen lässt sich das Dichtungselement bei Bedarf bereichsweise dicker ausbilden. Zickzack-förmige oder mäanderförmige Faltungen im Bereich der Axialabschnitte können überdies die Anpassungsfähigkeit des Dichtungselements an unterschiedliche radiale Einbaubedingungen verbessern.

Vorteilhaft ist das Metallblech wenigstens bis 450°C, bevorzugt bis 500°C hitzebeständig und/oder wenigstens bis 10 bar, bevorzugt bis 15 bar druckbeständig. Die verdichtete Luft besitzt gewöhnlich eine Temperatur von ungefähr 450°C und einen Druck von ungefähr 10 bar. Das Dichtungselement soll daher diesen Temperatur- und Druckbedingungen standhalten und aus Sicherheitsgründen eine darüber hinausgehende Beständigkeit besitzen.

Vorteilhaft besteht das Dichtungselement aus einem elastischen Material. Die Elastizität des Materials kann die Anpassungsfähigkeit des Dichtungselements an unterschiedliche radiale Einbaubedingungen weiter verbessern.

Weitere Merkmale und Vorteile der vorliegenden Erfindung werden anhand der Beschreibung einer Ausführungsform einer erfindungsgemäßen Gasturbine unter Bezugnahme auf die beiliegende Zeichnung deutlich. Darin ist
- Figur 1: eine teilweise Querschnittsansicht einer Gasturbine gemäß einer ersten Ausführungsform der vorliegenden Erfindung;
- Figur 2: eine Detailansicht des in Figur 1 mit dem Bezugszeichen II bezeichneten Ausschnitts;
- Figur 3: eine Detailansicht des in Figur 2 mit dem Bezugszeichen III bezeichneten Ausschnitts;
- Figur 4: eine der Figur 3 entsprechende Detailansicht mit einem Dichtungselement gemäß einer zweiten Ausführungsform der vorliegenden Erfindung; und
- Figur 5: eine den Figuren 3 und 4 entsprechende Detailansicht einer Gasturbine gemäß dem Stand der Technik.

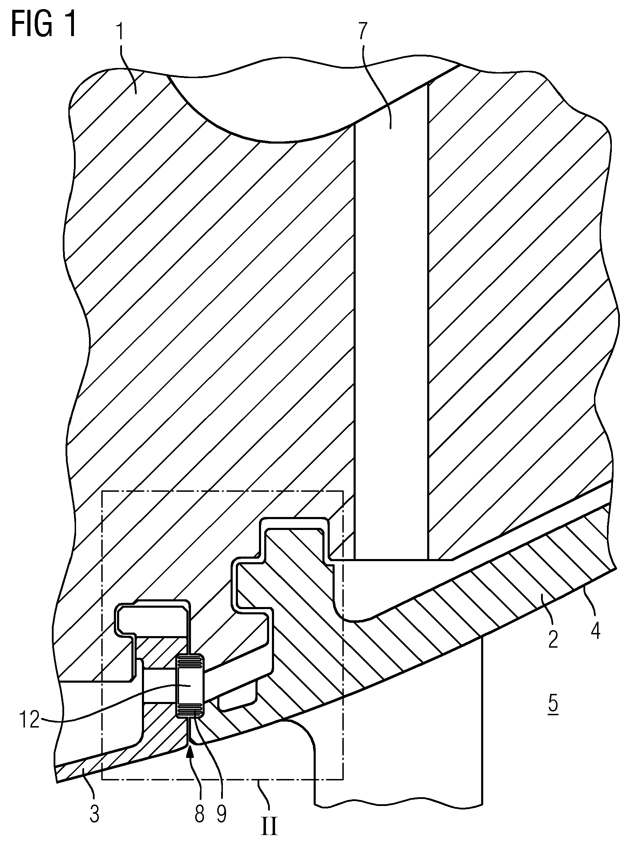

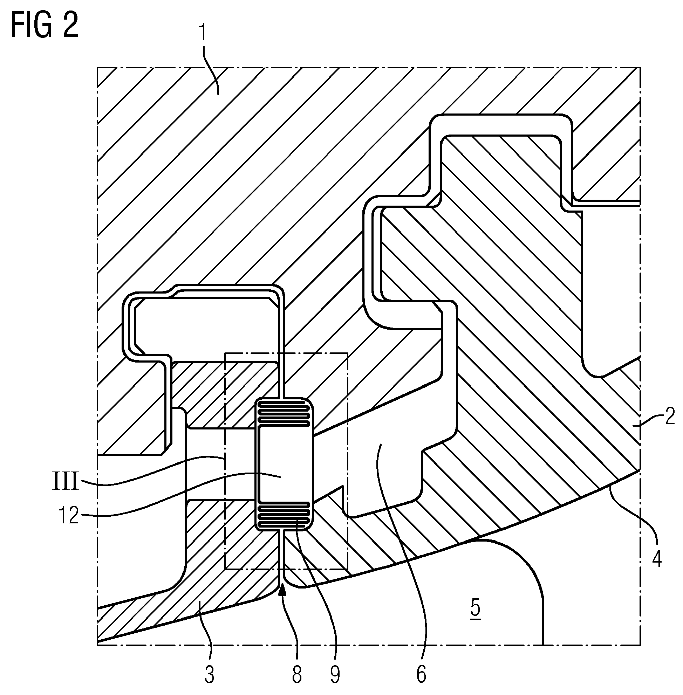

Die Figuren 1 bis 3 zeigen eine Gasturbine gemäß einer ersten Ausführungsform der vorliegenden Erfindung. Die Gasturbine umfasst ein Gehäuse 1, an dessen Innenseite Leitschaufelkränze 2 und Zwischenkränze 3 gehalten sind. Die Leitschaufelkränze 2 und Zwischenkränze 3 sind in einer axialen Richtung abwechselnd nebeneinander angeordnet und definieren eine Außenwandung 4 eines sich in der axialen Richtung erstreckenden Strömungskanals 5. Jeder Zwischenkranz 3 umfasst eine Mehrzahl von Kranzsegmenten, die entlang einer Umfangsrichtung nebeneinander angeordnet sind.

Zwischen dem Gehäuse 1 und den Kränzen 2, 3 ist zumindest ein Kühlkanal 6 ausgebildet, in den eine Mehrzahl von Kühlfluidzuleitungen 7 mündet, die in dem Gehäuse 1 ausgebildet sind. Die axiale Position der Mündungen der Kühlfluidzuleitungen 7 korrespondiert zu der axialen Position der Leitschaufelkränze 2.

Benachbart angeordnete Kränze 2, 3 bilden zwischen sich jeweils einen ringförmigen Axialspalt 8, der den Kühlkanal 6 mit dem Strömungskanal 5 verbindet. Jedem Axialspalt 8 ist ein ringförmiges Dichtungselement 9 zugeordnet, das in dem Kühlkanal 6 positioniert ist.

Das Dichtungselement 9 besitzt einen C-förmigen Querschnitt mit einem sich in radialer Richtung erstreckenden Radialabschnitt 10 und zwei sich senkrecht zu dem Radialabschnitt 10 erstreckenden Axialabschnitten 11. Das Dichtungselement 9 weist ein bis 500°C hitzebeständiges und bis 15 bar druckbeständiges elastisches Metallblech auf, das im Bereich der Axialabschnitte 11 zickzack-förmig oder mäanderförmig nach außen gefaltet ist. Das Dichtungselement 9 ist in dem Kühlkanal 6 derart angeordnet, dass die freien Enden seiner Axialabschnitte 11 zu dem benachbarten Leitschaufelkranz 2 weisen. Das Dichtungselement 9 ist in einen ringförmigen Aufnahmeraum 12 eingesetzt, der durch die benachbart angeordneten Kränze 2, 3 und das Gehäuse 1 definiert ist. Dabei ist der Aufnahmeraum 12 teilweise in zueinander weisenden axialen Stirnflächen der benachbart angeordneten Kränze 2, 3 ausgebildet. In dem Aufnahmeraum 12 ist das Dichtungselement 9 derart radial vorgespannt, dass sich die Axialabschnitte 11 gegen die radial inneren und äußeren Umfangsflächen des Aufnahmeraums 12 radial abstützen.

Während des Betriebs der Gasturbine wird dem Kühlkanal 6 durch die Kühlfluidzuleitungen 7 verdichtete Luft als Kühlfluid zugeführt. Das zugeführte Kühlfluid strömt zum einen in die Leitschaufeln des Leitschaufelkranzes 2. Zum anderen strömt das Kühlfluid durch den Kühlkanal 6 zu den benachbarten Zwischenkränzen 3, um die Außenwandung 4 des Strömungskanals 5 von dessen Kaltseite her zu kühlen. Alternativ oder zusätzlich kann die Außenwandung 4 mittels Filmkühlung gekühlt werden, indem Kühlfluid durch Filmkühlungsbohrungen aus dem Kühlkanal 6 in den Strömungskanal 5 zu leiten, wo es einen Kühlfluidfilm auf der Heißseite der Außenwandung 4 bildet, der die Außenwandung 4 vor dem durch den Strömungskanal 5 strömenden Heißgas schützt. Durch das Dichtungselement 9 ist der zwischen benachbarten Kränzen 2, 3 gebildete Axialspalt 8 gegen ein Entweichen von Kühlfluid aus dem Kühlkanal 6 in den Strömungskanal 5 abgedichtet.

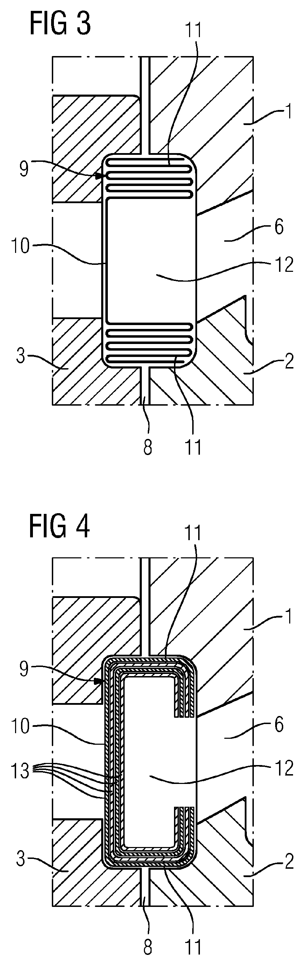

Figur 4 zeigt eine Gasturbine gemäß einer zweiten Ausführungsform der vorliegenden Erfindung. Die Gasturbine besitzt denselben Grundaufbau wie die in den Figuren 1 bis 3 dargestellte Gasturbine gemäß der ersten Ausführungsform der vorliegenden Erfindung. Im Unterschied zu dieser weist sie ein Dichtungselement 9 auf, das über den Radialabschnitt 10 und die beiden Axialabschnitte 1 hinweg eine Mehrzahl durchgehender Schichten 13 aufweist. Die Schichten 13 sind insgesamt aus zwei unterschiedlichen Materialien gefertigt, wobei jeweils zwei benachbarte Schichten 13 aus unterschiedlichem Material bestehen.

Durch die Kombination unterschiedlicher Materialien lässt sich das Dichtungselement 9 dieser Ausführungsform beispielsweise mit einer verbesserten Hitzebeständigkeit und/oder einer verbesserten Druckbeständigkeit gegenüber dem Kühlfluid und/oder einer hitzeabhängigen Biegewirkung ausstatten. Entsprechend eignet sich ein solches Dichtungselement 9 für die Verwendung in Gasturbinen, deren Kühlfluid besonders heiß und/oder besonders dicht ist.

Vorteile der erfindungsgemäßen Gasturbine liegen in deren höherer Kühlleistung, die zu einer längeren Lebensdauer der von dem Heißgas erhitzten Leitschaufelkränze 2 und Zwischenkränze 3 führt, und/oder dem höheren thermischen Wirkungsgrad der Gasturbine, da das sich in dem Strömungskanal 6 entspannende Heißgas nicht durch aus dem Axialspalt 8 eindringendes Kühlfluid abgekühlt wird. Ferner bietet das erfindungsgemäße Dichtungselement 9 die Möglichkeit, Gasturbinen nach dem Stand der Technik im Rahmen einer gewöhnlichen Wartung durch einfaches Einsetzen der Dichtungselemente umzurüsten. Das erfindungsgemäße Dichtungselement 9 ist unkompliziert in der Handhabung und mit geringerem Materialeinsatz als bisherige Dichtungselemente herstellbar, was mit entsprechender Kostenreduktion einhergeht. Ein weiterer Vorteil des erfindungsgemäßen Dichtungselements 9 ist darin zu sehen, dass es den Axialspalt 8 bei variablen Einbaubedingungen insbesondere dank einer Federwirkung zuverlässig abdichtet und sich dabei auch an betriebsbedingt veränderte Einbaubedingungen anpasst. Zudem kann sich seine Abdichtwirkung aufgrund des C-förmigen Querschnitts unter Betriebsbedingungen noch erhöhen, wodurch die Abdichtwirkung weiter verbessert wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gasturbine mit einem Gehäuse und an einer Innenseite des Gehäuses gehaltenen Leitschaufelkränzen und Zwischenkränzen, die in einer axialen Richtung abwechselnd nebeneinander angeordnet sind und eine Außenwandung eines sich in der axialen Richtung erstreckenden Strömungskanals definieren, wobei zwischen dem Gehäuse und den Kränzen zumindest ein Kühlkanal ausgebildet ist, und
wobei wenigstens einem, insbesondere jedem zwischen benachbart angeordneten Kränzen gebildeten und den Strömungskanal mit dem zumindest einen Kühlkanal verbindenden Axialspalt ein ringförmiges und in dem zumindest einen Kühlkanal positioniertes Dichtungselement zugeordnet ist,
**dadurch gekennzeichnet, dass**
das Dichtungselement einen im Wesentlichen C-förmigen Querschnitt mit einem sich in radialer Richtung erstreckenden Radialabschnitt und zwei sich senkrecht zu dem Radialabschnitt erstreckenden Axialabschnitten aufweist.

2. Gasturbine nach Anspruch 1,
**dadurch gekennzeichnet, dass**
das Dichtungselement ein Metallblech aufweist, wobei das Metallblech bereichsweise Zickzack-förmig oder mäanderförmig gefaltet ist, insbesondere im Bereich der Axialabschnitte.

3. Gasturbine nach Anspruch 2,
**dadurch gekennzeichnet, dass**
das Metallblech wenigstens bis 450°C, bevorzugt bis 500°C hitzebeständig und/oder wenigstens bis 10 bar, bevorzugt bis 15 bar druckbeständig ist.

4. Gasturbine nach einem der vorhergehenden Ansprüche,
**dadurch gekennzeichnet, dass**
das Dichtungselement wenigstens abschnittsweise eine Mehrzahl von Schichten aufweist,
wobei insbesondere wenigstens zwei Schichten aus unterschiedlichen Materialien bestehen.

5. Gasturbine nach einem der vorhergehenden Ansprüche,
**dadurch gekennzeichnet, dass**
das Dichtungselement derart angeordnet ist, dass die freien Enden seiner Axialabschnitte zu dem Leitschaufelkranz weisen.

6. Gasturbine nach einem der vorhergehenden Ansprüche,
**dadurch gekennzeichnet, dass**
das Dichtungselement in einen ringförmigen Aufnahmeraum eingesetzt ist, der durch zwei benachbart angeordnete Kränze und/oder das Gehäuse definiert ist.

7. Gasturbine nach Anspruch 6,
**dadurch gekennzeichnet, dass**
der Aufnahmeraum zumindest teilweise in zueinander weisenden axialen Stirnflächen benachbart angeordneter Kränze ausgebildet ist.

8. Gasturbine nach einem der Ansprüche 6 oder 7,
**dadurch gekennzeichnet, dass**
das Dichtungselement in dem Aufnahmeraum derart radial vorgespannt ist, dass sich die Axialabschnitte gegen Umfangsflächen des Aufnahmeraums abstützen.

9. Gasturbine nach einem der vorhergehenden Ansprüche,
**dadurch gekennzeichnet, dass**
jeder Leitschaufelkranz und/oder jeder Zwischenkranz eine Mehrzahl von Kranzsegmenten umfasst, die entlang einer Umfangsrichtung nebeneinander angeordnet sind.

10. Gasturbine nach einem der vorhergehenden Ansprüche,
**dadurch gekennzeichnet, dass**
in dem Gehäuse eine Mehrzahl von Kühlfluidzuleitungen ausgebildet ist, die in den zumindest einen Kühlkanal münden.

11. Ringförmiges Dichtungselement zum Abdichten eines Axialspalts zwischen einem Leitschaufelkranz und einem axial benachbart angeordneten Zwischenkranz einer Gasturbine,
**dadurch gekennzeichnet, dass**
das Dichtungselement einen im Wesentlichen C-förmigen Querschnitt mit einem sich in radialer Richtung erstreckenden Radialabschnitt und zwei sich senkrecht zu dem Radialabschnitt erstreckenden Axialabschnitten besitzt.

12. Dichtungselement nach Anspruch 11,
**dadurch gekennzeichnet, dass**
das Dichtungselement wenigstens abschnittsweise eine Mehrzahl von Schichten aufweist,
wobei insbesondere wenigstens zwei Schichten aus unterschiedlichen Materialien bestehen.

13. Dichtungselement nach einem der Ansprüche 11 oder 12,
**dadurch gekennzeichnet, dass**
das Dichtungselement ein Metallblech aufweist, wobei das Metallblech bereichsweise Zickzack-förmig oder mäanderförmig gefaltet ist, insbesondere im Bereich der Axialabschnitte.

14. Dichtungselement nach einem Anspruch 13,
**dadurch gekennzeichnet, dass**
das Metallblech wenigstens bis 450°C, bevorzugt bis 500°C hitzebeständig und/oder wenigstens bis 10 bar, bevorzugt bis 15 bar druckbeständig ist.

15. Dichtungselement nach einem der Ansprüche 11 bis 14,
**dadurch gekennzeichnet, dass**
das Dichtungselement aus einem elastischen Material besteht.
